# EUROPEAN PATENT APPLICATION

(11) **EP 2 189 870 A1**
(43) Date of publication of application: **26.05.2010**
(21) Application number: 08305834.7
(22) Date of filing: 25.11.2008
(51) Int. Cl.: G05F 1/575, H02M 3/158

(54) **A switch-mode voltage regulator**

(71) Applicant: ST MICROELECTRONICS S.A., 92120 Montrouge (FR)
(72) Inventor: Trochut, Séverin, 73200 Gilly sur Isère (FR)
(74) Representative: de Beaumont, Michel

(57) **Abstract**

The invention concerns a switch-mode voltage regulator, comprising: an inductor (L); a generator for producing a voltage ramp (16); circuitry (12, 13) for producing at least one pulse stream from said voltage ramp; switch control circuitry (14) for controlling switching of a current in the inductor according to said pulse stream; and a first control loop adapted to modulate the form of the voltage ramp according to the current flowing in the inductor.

## Description

### FIELD OF THE INVENTION

The present invention concerns switch-mode power supplies (DC-DC converters), in particular those in integrated circuit form capable of providing a regulated output power supply both below and above the unregulated input power supply. Such DC-DC converters are commonly known as buck-boost converters or step UP/DOWN DC/DC converters.

### BACKGROUND OF THE INVENTION

Switched mode power supplies are widely used in battery powered equipment to convert an unregulated supply from the battery voltage into a regulated supply for other electronic circuits which are highly sensitive to power supply stability.

The voltage supplied by batteries varies significantly as a function of the level of charge remaining. Therefore, the wider the range of voltage the electronic circuits can function over, the longer the equipment can be used between changing or charging the battery. For example, it is common for the voltage supplied by the battery in a mobile battery powered equipment to be allowed to drop from about 5V just after charging down to below 3V before the user is prompted to recharge the battery.

However some electronic circuits only function at voltage above the minimum allowed battery voltage. In order to guaranty circuits functionality, it is desirable to have DC-DC converters able to provide regulated supplies at voltages below the battery voltage when the battery is fully charged (buck mode) and to provide regulated supplies above the battery voltage when it is close to its minimum charge level (boost mode).

Furthermore it is desirable that such converters be able to pass from buck mode to boost mode automatically, without requiring intervention from the person using the equipment. Because the electronics receiving the regulated supply is sensitive, severe constraints are place on the level of disturbances on the supply such as ripple or spikes that can be tolerated.

An implementation of a DC-DC converter uses a measurement of the voltage at the output of the DC-DC converter to set an error voltage at a comparator. This error signal is compared to a voltage ramp in order to produce a pulse width modulated (PWM) stream. The PWM stream is then used to control a switching system connected to a rectifier which contains an inductor. The DC-DC converter has a single control loop based on the output voltage.

To avoid instability that could occur in such an implementation of the DC-DC converter under certain load conditions, a trade-off between bandwidth, maximum load, efficiency and responsiveness to transients must be made. It is desirable to obtain the best possible maximum load and responsiveness to transients whilst avoiding instability.

### SUMARY OF THE INVENTION

For the above reasons, it is desirable to make a DC-DC converter able to pass smoothly between buck and boost modes without the problems of instability and without significant increase chip area or power consumption.

More generally, it is desirable to improve the stability of a boost converter. According to an aspect, there is provided a switch-mode voltage regulator which comprises:
an inductor;
a generator for producing a voltage ramp;
circuitry for producing at least one pulse stream from said voltage ramp;
switch control circuitry for controlling switching of a current in the inductor according to said pulse stream; and which further comprises a first control loop adapted to modulate the form of the voltage ramp according to the current flowing in the inductor.

According to an embodiment, the switch-mode voltage regulator further comprises a current-to-voltage modulator coupled to said inductor and to said voltage ramp generator.

According to an embodiment, said switch control circuitry is further controlled by a second control loop according to a voltage present on an output of the regulator.

According to an embodiment, said second control loop comprises:
a reference voltage source;
an amplifier having a first input coupled to said reference voltage source and a second input coupled to said output;
a threshold generator; and
a comparator.

According to an embodiment, said comparator has a first input coupled to said threshold generator and a second input coupled to said current-to-voltage modulator.

According to an embodiment, the switch mode voltage regulator has an output stage further comprising:
a first switch coupled between an unregulated supply terminal and a first terminal of the inductor;
a second switch coupled between the first terminal of the inductor and a negative supply;
a third switch coupled between a second terminal of the inductor and the regulated supply output;
a fourth switch coupled between the second terminal of the inductor and the negative supply; and
a capacitor coupled between the regulated supply output and the negative supply.

According to an embodiment, the first and third switches are PMOS transistors and the second and fourth switches are NMOS transistors.

According to an embodiment, there is provided a battery-powered mobile equipment comprising a switch-mode voltage regulator.

There is also provided a method of controlling an output voltage of a switch-mode voltage regulator having an inductor comprising the steps of:
generating at least one pulse modulated signal from a voltage ramp to switch a current in the inductor; and
modulating said voltage ramp according to the current flowing in the inductor.

According to an embodiment, a comparison is made of said voltage ramp after modulation to at least one threshold derived from a measurement of said output voltage.

According to an embodiment, said comparison is used to modulate the width of pulses in at least one pulse stream.

According to an embodiment, said pulse stream is used to control the switching of a current flowing in the inductor.

According to an embodiment, charge storage is used to derive a DC voltage from the current flowing in the inductor.

According to an embodiment, said voltage ramp has a constant time period.

### BRIEF DESCRIPTION OF THE DRAWINGS

Fig 1 represents an embodiment of a buck-boost converter;
Fig 2 represents the output stage of the buck-boost converter of fig 1 in more detail;
Figs 3A, 3B and 3C represent three phases of operation of the output stage of the buck-boost converter of figs 1 and 2;
Fig 4 is a timing diagram illustrating the operation of a usual DC-DC converter.
Fig 5 is a timing diagram illustrating the operation of the converter of Fig 1.
Fig 6 is a timing diagram illustrating the operation of the DC-DC of Fig 1 in boost mode.
Fig 7 is a block diagram a mobile battery powered equipment containing a buck-boost converter according to an embodiment of the invention.

### DETAILED DESCRIPTION OF THE INVENTION

Same references designate same elements in the different figures. Furthermore, only the elements which are useful to understanding are represented and disclosed. Especially the circuits downstream of the DC-DC converter are not detailed, these circuits being compatible with any usual use of a regulated voltage.

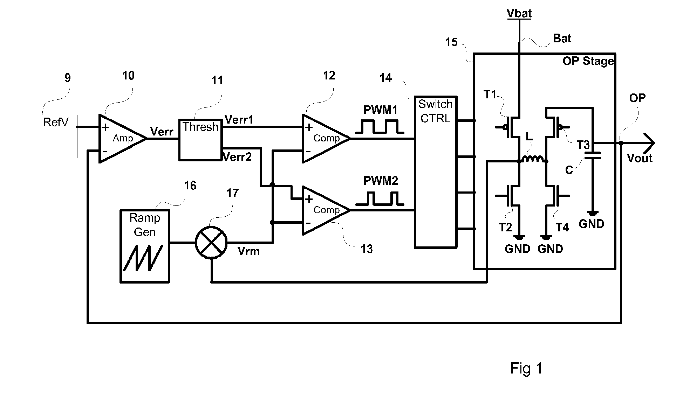

Fig 1 represents an embodiment of a buck-boost converter, able to pass between buck and boost modes without interruption of the regulated supply.

An error amplifier **10** (Amp) receives a reference voltage from a reference voltage source **9** (RefV) at its noninverting input. Error amplifier **10** has its inverting input coupled to output **OP** of the buck-boost converter. The error signal **Verr** output by error amplifier **10** is provided to a threshold generator **11** (Thresh) which supplies a first derived error signal **Verr1** to a first comparator **12** (Comp) and a second derived error signal **Verr2,** offset from derived error signal Verr1, to a second comparator **13.** Derived error signal **Verr1** may be the same as or different to error signal **Verr.**

Comparators **12** and **13** provide pulse streams, **PWM1** and **PWM2** respectively, to switch control logic **14** (Switch CTRL). Switch control logic **14** supplies four signals to an output stage **15** (OP Stage). Pulse streams **PWM1** and **PWM2** are pulse width modulated in this example.

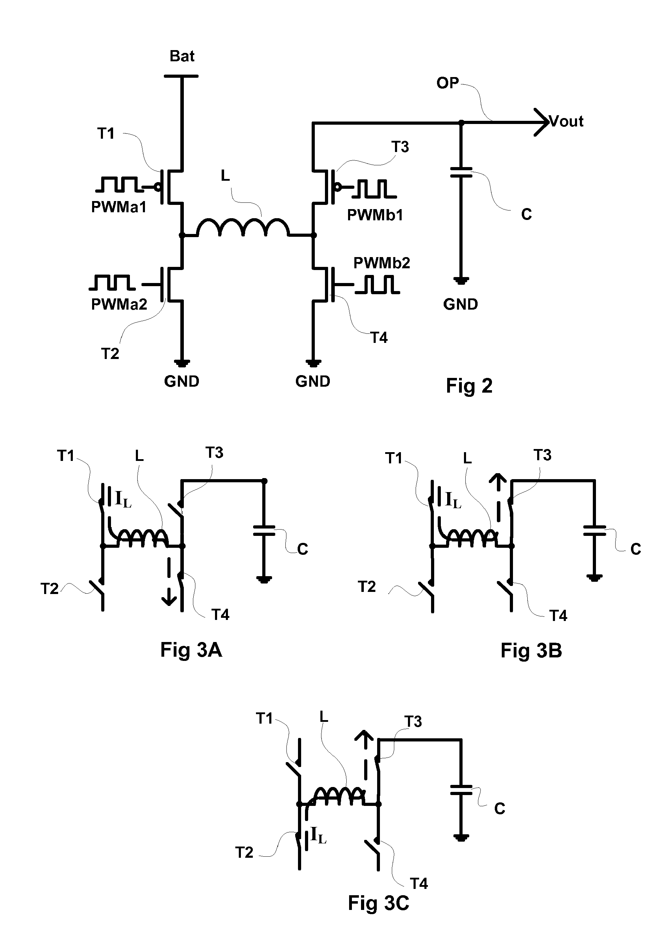

Fig 2 represents the output stage **15** in more detail. A first PMOS transistor **T1** is coupled between a supply terminal **Bat** which receives a supply **Vbat** coming from the battery (not shown), and a first terminal of an inductor **L.** Between the first terminal of inductor **L** and a ground **GND** is coupled a first **NMOS** transistor **T2.** Between an output **OP,** providing the regulated voltage, and a second terminal of inductor **L,** is coupled a second PMOS transistor **T3.** A second NMOS transistor **T4** is coupled between the second terminal of inductor **L** and ground **GND.** A capacitor **C** is coupled between output **OP** and ground **GND.**

More generally, transistors **T1-4** can be any type of switch. Switches, **T1-4,** are opened and closed by two **PWM** streams, **PWMa, PWNB,** delivered by the switch control logic **14.** Pulse streams **PWMa1** and **PWMa2** are two **PWM** signals derived from **PWM** stream **PWMa** and are respectively used to control switches **T1** and **T2.** Pulse streams **PWMb1** and **PWMb2** are two **PWM** signals derived from **PWM** stream **PWMb** and are respectively used to control transistors **T3** and **T4.** The four **PWM** streams share the same constant time period and are derived from a combination of **PWM** streams **PWMa** and **PWMb** performed by switch control logic **14.**

Fig 3A, 3B and 3C represent three operating configurations of the output stage **15.** In the interests of clarity, switches **T1-T4** and inductor L are focused on and other elements are not shown.

Fig3A shows a first configuration (phase 1) where switches **T1** and **T4** are closed whilst switches **T2** and **T3** are open. A current **I_{L}** flows through inductor **L** as shown, from supply **Vbat** to ground **GND.** Whilst this configuration is maintained, the current **I_{L}** increases in magnitude at a constant rate.

Fig3B shows a second configuration (phase 2) where switches **T1** and **T3** are closed and switches **T2** and **T4** are open. A current **I_{L}** flows through inductor **L** from supply **Vbat** to output **OP.**

Fig 3C shows a third configuration (phase 3) where switches **T1** and **T4** are open and switches **T2** and **T3** are closed. The current **I_{L}** flows from ground **GND** to output **OP** and decreases in magnitude at a constant rate.

When phases 2 and 3 are alternated, the DC-DC converter operates in purely buck mode. In this mode, it is convenient to note that in both phases, energy is transferred from inductor **L** to capacitor C.

When phases 1 and 2 are alternated, the DC-DC converter operates purely in boost mode. In this mode, it is convenient to consider that during phase 1, energy is being stored in inductor **L** that will be then delivered to capacitor **C** during phase 2. It can be seen that during phase 3, capacitor **C** is receiving charge whereas during phase 1 it is not.

When phases 1 and 3 are alternated, the DC/DC converter operates purely in 2 phase Buck-Boost mode. In this mode, it is convenient to consider that during phase 1, energy is being stored in inductor L that will be delivered to capacitor C during phase 3.

The width of the pulses in pulse streams **PWM1** and **PWM2** is modulated in proportionality to the difference between **Vout** and **Vref** so as to set **Vout** equal to **Vref.**

As can be easily understood, to operate the DC-DC converter in either purely buck or purely boost mode, only one PWM stream would be required. The modulation of the PWM stream and the control of the switching could simply be adapted to the mode, buck or boost, being used. However in such a DC-DC converter, there would be unacceptable levels of disturbances, such as spikes or ripple, on the regulated supply during the transitions between buck and boost modes.

A solution to this problem is a DC-DC converter that can function with all three phases at once, transitioning gradually from using one pair of configurations to the other pair of configurations. For this, two PWM streams are required simultaneously.

In one solution for controlling two PWM streams, a single ramp signal is used. From voltage **Verr,** two error signals at different levels are derived. The single ramp signal is compared to these two error signals.

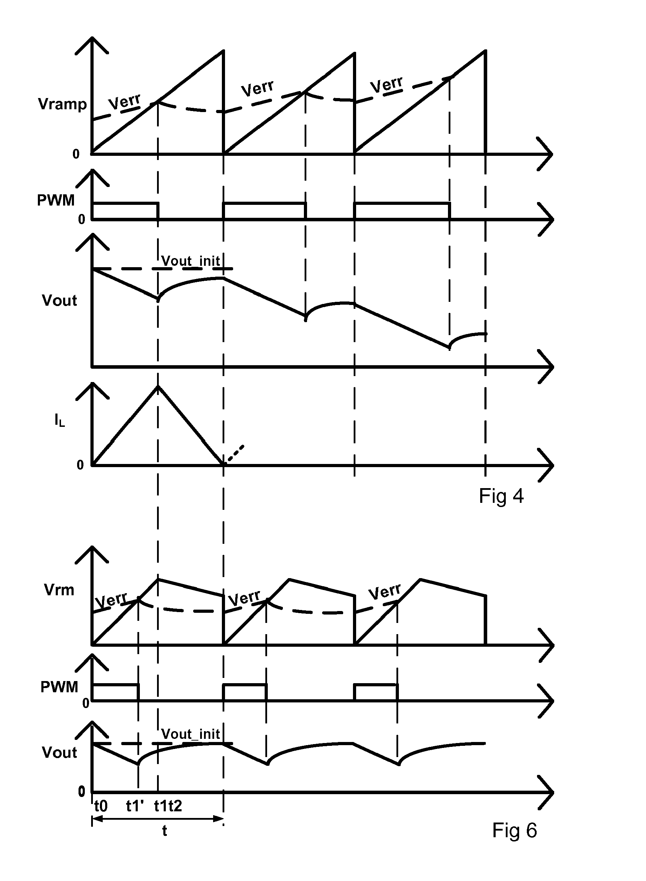

Fig 4 represents the change over time of voltages and currents in a usual DC-DC converter in boost mode when a sudden large increase in demand from the load for current beyond normal operating parameters has occurred. At time **t0** a cycle starts in phase 1 and voltage ramp **Vramp** begins.

The current **I_{L}** in inductor **L** rises at a constant rate as shown by the graph of **I_{L}.**

Because the battery is not connected to the output during this phase, all the current demanded by the load is supplied by capacitor **C** which results in capacitor **C** being discharged. Consequently, output voltage **Vout** drops from its initial value **Vout_init.** The single control loop, which measures **Vout,** increases the error signal voltage as shown by the dotted line **Verr** superimposed on the graph of **Vramp.** In this illustration, no account is taken any propagation delays between changes of output voltage **Vout** and adjustments to **Verr.**

At time t1, voltage **Vramp** crosses threshold voltage **Vth** and the pulse of pulse stream PWM is ended. The DC-DC converter passes into phase 3 and current **I_{L}** decreases as shown by the graph of **I_{L}.** Charging of capacitor C starts and voltage **Vout** rises accordingly. At time **t2** the cycle is ended and another one begins.

However, during the phase 3, voltage **Vout** has not returned to its initial level **Vout_init** so error signal **Verr** starts at a higher level than it did in the previous cycle and rises to higher levels than before. Consequently, the duration of phase 1 in this cycle is longer than that of the previous cycle and the duration of phase 3 is shorter. Capacitor **C** is therefore discharged to an even greater degree and voltage **Vout** is even lower at the end of this cycle than when this cycle was started. If the demand for current remains unchanged, in the succeeding cycle, the events are repeated in a similar manner and the downward trend of the average of voltage **Vout** continues. This trend will stop if circumstances change so that the energy stored in coil is high enough to increase output voltage during the time coil is connected to output.

It is possible to avoid this situation by limiting the maximum allowable duty cycle and so limiting the performance of DC-DC converter in terms of maximum allowed current and reducing the bandwidth. A more common occurrence is where the increase in demand for current is transient. In this case voltage **Vout** drops as before and then overshoots when it rises again, causing unacceptable levels of ripple on the regulated output. Limiting the bandwidth of the DC-DC converter has the effect of deteriorating its ability to cope with transient demands.

The control loop is unable to take into account the energy actually being stored in the inductor **L** sufficiently quickly.

However, it is preferable to find a solution which does not involve reducing the loop bandwidth in order to obtain a system that is best able to control level of spikes and ripple produced in response the load variations.

Another solution to the instability condition in boost converters is to use the difference voltage **Verr** to define the slope of a negative going voltage ramp of constant time period. This voltage ramp is compared continuously to a signal of voltage proportional to the current **I_{L}** flowing in the inductor in order to set the width of the pulses in the pulse stream. In order to use this solution with a buck-boost converter having three phases, it would be necessary to duplicate the ramp generation circuitry, which would imply an increase in chip area and power consumption.

According to the embodiment of Fig 1, a voltage ramp generator **16** (Ramp Gen) provides a voltage ramp to a first input of modulator circuit **17.** The common point of switches **T1, T2** and inductor **L** is coupled to a second input of modulator **17.** Modulator **17** is able to modulate a signal representative of the current present in inductor **L** onto the signal coming from voltage ramp generator **16.** Modulator **17** supplies a modulated ramp signal to the inverting inputs of comparators **12** and **13.**

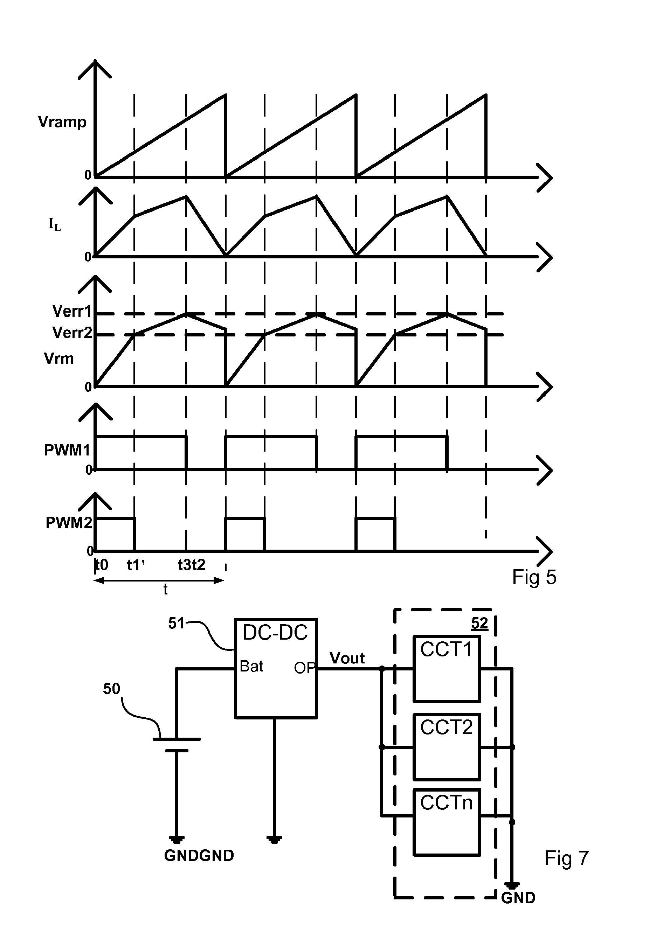

Fig 5 is a timing diagram illustrating the operation of the buck-boost converter as described in Fig 2.

A voltage ramp **Vramp** of constant time period **t** is produced by ramp generator **16.** Signal **I_{L}** represents the current **I_{L}** flowing in inductor **L.** Voltage ramp **Vramp** is modulated by modulator **17** in proportion to current **I_{L'}** producing a signal **Vrm.**

The control loop which measures output voltage **Vout** sets the error signals **Verr1** and **Verr2** to the levels shown.

At time **t0** a time period has just been started in phase **1** (as in Fig 3A) and a pulse is started in both pulse streams **PWM1** and **PWM2.**

Between **t0** and **t1',** the slope of **Vrm** is increased relative to **Vramp** to reflect the increasing value of current **I_{L}.** At time **t1', Vrm** crosses error signal **Verr2** and the pulse in pulse stream **PWM2** is ended. At this point the buck-boost converter passes into phase **2.** During this phase, the current flowing **I_{L}** is still increasing but less rapidly than in phase **1** and this is reflected in the reduced slope of voltage ramp **Vrm.**

At time **t3** voltage ramp **Vrm** crosses error signal **Verr1** and the pulse in pulse stream **PWM1** is ended. At this point the buck-boost converter enters phase 3. During this phase, the current **I_{L}** is decreasing and consequently, the slope of **Vrm** is negative.

Any variations of error signals **Verr1, Verr2** occurring within a cycle are not shown at this point for simplicity.

Finally at **t2** the cycle is complete and a new one begins.

Fig 6 represents in more detail the operation of the DC-DC converter of Fig 1 in boost mode that has undergone a large increase in demand for current from the load.

The graph of **Vrm** represents, as in Fig 5, the voltage of the modulated voltage ramp. As in Fig 4, a cycle starts in phase 1 at time **t0.** As in Fig 4, the current in inductor **L, I_{L},** increases at a constant rate as shown. Because capacitor **C** must alone supply the current required by the load, it is discharged and voltage **Vout** drops as shown. As in Fig 4, error signal **Verr** increases. For simplicity, only one error signal, **Verr,** is shown.

At time **t1',** voltage ramp **Vrm** crosses error signal **Verr** and phase 3 begins. The phase 2 of Fig 5 is not represented. In phase3, current **I_{L}** reduces as before, capacitor **C** is charged again and voltage **Vout** rises.

Time **t1'** is earlier than time **t1.** This is because the slope of **Vrm** during phase 1 has been increased in relation to the level of current **I_{L},** and voltage ramp **Vrm** crosses error signal **Verr** earlier than would have the un-modulated voltage ramp **Vramp** of Fig 4.

Therefore phase 1 is kept shorter and phase 3 is kept longer than would have been the case without the control loop modulating the voltage ramp.

The result of this is that the discharging of capacitor **C** during phase 1 is lessened and phase 3 is long enough for it to be charged back up to the level it was at the start of the cycle. Thus **Vout** rises back to its initial level and the error signal **Verr** starts at the level at which it started in the previous cycle.

The subsequent cycles occur in a similar manner and voltage **Vout** does not display a downward trend longer than one cycle.

Because it has not been necessary to reduce the control loop bandwidth, the DC-DC converter is better able to respond to transient changes in demand. Furthermore this has been achieved with only a small increase in chip area and power consumption.

The conversion gain of the second control loop, including the modulator and the setting of the second error signal **Verr2** must be adjusted in accordance with the parameters of the DC-DC converter in question. Such parameters include the voltages of the battery and the regulated output, the output current, the inductor and capacitor values and bandwidth desired for the output voltage control loop.

Fig 7 represents a mobile battery powered system where a battery **50,** rechargeable or not is coupled between a ground **GND** and a positive input **Bat** of a DC-DC converter **51 .** An output **OP** makes available a regulated supply **Vout** and is coupled to positive supplies of a plurality of circuits **52** (CCT1, CCT2...CCTn). The plurality of circuits **52** have their negative supplies coupled to ground **GND.**

Switch control logic **14** has not been described in detail and one of ordinary skill will be able implement such circuitry.

One of ordinary skill will be able to implement the circuitry for producing reference voltage **Vref.**

The foregoing, with its features, aspects and purposes is given by way of illustration and not limitation. Indeed, it is not intended that the embodiment described be considered the only one concerned by the present invention, nor should it be considered limited to DC-DC converters having an output stage like that described.

Indeed any switch-mode DC-DC converter having a boost mode where one part of the cycle sees the capacitor not connected to the battery may be at risk of instability.

Therefore, a feedback loop which modulates the voltage ramp in accordance with the current in the inductor could be used for other types of converter having a different configuration of output stage, for example those using diodes in the place of some of the switches.

The above examples have been discussed in terms of pulse width modulation. However more complex modulations, such as those using pulse-skipping, could also be used.

Furthermore, even though a DC-DC converter with two pulse streams has been discussed, DC-DC converters having more than two pulse streams and having a control loop modulating a voltage ramp according to the current in the inductor would also be possible. An example of such a converter would be one where a central control and pulse stream generator is used to control multiple output stages. In this case, a circuit for multiplexing the measurements of the currents in the inductors would be necessary.

## Claims

1. A switch-mode voltage regulator, comprising :
an inductor (L);
a generator for producing a voltage ramp (16);
circuitry (12, 13) for producing at least one pulse stream from said voltage ramp;
switch control circuitry (14) for controlling switching of a current in the inductor according to said pulse stream;
**characterized in that** it further comprises a first control loop adapted to modulate the form of the voltage ramp according to the current flowing in the inductor.

2. A switch-mode voltage regulator according to claim 1 further comprising a current-to-voltage modulator (17) coupled to said inductor and to said voltage ramp generator.

3. A switch-mode voltage regulator according to claim 1 or 2, wherein said switch control circuitry (14) is further controlled by a second control loop according to a voltage present on an output (OP) of the regulator.

4. A switch-mode voltage regulator according to claim 3, wherein said second control loop comprises:
a reference voltage source (9);
an amplifier (10) having a first input coupled to said reference voltage source and a second input coupled to said output ;
a threshold generator (11); and
a comparator (12, 13).

5. A switch-mode voltage regulator according claim 4 in its dependency on claim 2 wherein said comparator (12, 13) has a first input coupled to said threshold generator (11) and a second input coupled to said current-to-voltage modulator (17).

6. A switch-mode voltage regulator according to any of claims 1 to 5 having an output stage (15) further comprising:
a first switch (T1) coupled between an unregulated supply terminal (Bat) and a first terminal of the inductor (L);
a second switch (T2) coupled between the first terminal of the inductor and a negative supply (GND);
a third switch (T3) coupled between a second terminal of the inductor and the regulated supply output (OP) ;
a fourth switch coupled between the second terminal of the inductor and the negative supply; and
a capacitor (C) coupled between the regulated supply output and the negative supply.

7. A switch-mode voltage regulator according to claim 6 wherein the first and third switches (T1, T3) are PMOS transistors and the second and fourth switches (T2, T4) are NMOS transistors.

8. A battery-powered mobile equipment comprising a switch-mode voltage regulator (51) according to any of claims 1 to 7.

9. A method of controlling an output voltage of a switch-mode voltage regulator having an inductor comprising the steps of:
generating at least one pulse modulated signal (PWM1, PWM2) from a voltage ramp (Vrm) to switch a current (I_{L}) in the inductor (L); and
modulating said voltage ramp according to the current flowing in the inductor.

10. A method according to claim 9 wherein a comparison is made of said voltage ramp (Vrm) after modulation to at least one threshold (Vth1, Vth2) derived from a measurement of said output voltage (Vout).

11. A method according to claim 10 wherein said comparison is used to modulate the width of pulses in at least one pulse stream (PWM1, PWM2).

12. A method according to claim 11 wherein said pulse stream (PWM1, PWM2) is used to control the switching of a current flowing (I_{L}) in the inductor (L).

13. A method according to claim 12 wherein charge storage is used to derive a DC voltage (Vout) from the current flowing in the inductor (L).

14. A method according to any of claims 9 to 13 wherein said voltage ramp has a constant time period (t).
